# EUROPEAN PATENT SPECIFICATION

(11) **EP 0 625 127 B1**
(45) Date of publication and mention of the grant of the patent: **30.10.1996**
(21) Application number: 93904390.7
(22) Date of filing: 19.01.1993
(51) Int. Cl.: C02F 3/06

(54) **REACTOR FOR THE BIOLOGICAL TREATMENT OF WASTE WATER**
REAKTOR FÜR BIOLOGISCHE BEHANDLUNG VON ABWASSER
REACTEUR DESTINE AU TRAITEMENT BIOLOGIQUE DES EAUX USEES

(30) Priority: 04.02.1992 NL 9200201
(43) Date of publication of application: 23.11.1994
(73) Proprietor: Paques B.V., NL-8560 AB Balk (NL)
(72) Inventor: VELLINGA, Sjoerd, Hubertus, Jozef, NL-8458 CP Tjalleberd (NL)
(74) Representative: de Bruijn, Leendert C.
(86) International application number: NL9300018
(87) International publication number: WO9315024

(56) References cited:
- EP-A- 0 086 489
- EP-A- 0 133 545
- FR-A- 1 603 082

## Description

The invention relates to a reactor for the biological treatment of waste water, comprising a reactor vessel intended to receive support material in the form of a great number of pieces such lava fragments, plastic rings or cylinders or corrugated sheeting-like packages, to which biomass can adhere, which reactor vessel is provided with an inlet for water to be treated and an outlet for treated water.

Reactors of this type are known and are intended for fixed bed systems in which the support material is fitted in the system so that it is immobile. Examples of fixed bed systems are oxidation beds (trickling filters) for the aerobic treatment of waste water and submerged filters for the anaerobic treatment of waste water. In order to fix the support material for the biomass in the system, it is known in the case of aerobic trickling filters to fill the reactor vessel with small pieces of support material in the form of lava fragments, plastic rings or cylinders. It is also known to fill the reactor vessel with packages of corrugated sheeting-like constructions which are fitted staggered relative to one another.

A disadvantage of these systems is that they are susceptible to blockage, which is caused by solid particles in the waste water or by excessive growth of biomass or by precipitate formation. In order to remove a blockage, the reactor has to be completely shut down, the water has to be discharged and the support material has to be removed by hand and replaced by cleaned or fresh support material. It will be obvious that removal of a blockage in this way takes considerable time. In addition, odour problems can arise.

The aim of the invention is to overcome this disadvantage and to this end the reactor specified in the preamble is characterised in that a number of module tanks adjoining one another so that the horizontal cross section of the reactor vessel is occupied by the module tanks, and over which said support material pieces can be distributed, are placed in the reactor vessel, which module tanks can individually be inserted in and removed from the reactor.

By replacing one or a few module tanks at specific times by clean module tanks which are ready for use, the time for which the reactor is shut down can be kept to a minimum.

In particular, if the module tanks are fixed at their tops in an easily detachable manner, the tanks can be removed without the water having to flow out of the reactor.

A robust, easily detachable anchoring of the module tanks is obtained if the tanks rest, at some distance above the base of the reactor vessel, on supports from which tension anchors extend upwards to above the top of the modules through a slot in clamp plates, each clamp plate pressing on the corners of a number of modules and being detachably fixable by means of a wedge which is inserted through an eye in the upper end of a tension anchor.

Planks, which are fixed by means of the clamp plates, are preferably placed over the top edges of the module tanks.

The flow of water from the inlet via vertical downward and upward flows through the successive module tanks to the outlet can be achieved by means of baffle plates.

The invention will now be explained in more detail with the aid of the figures.

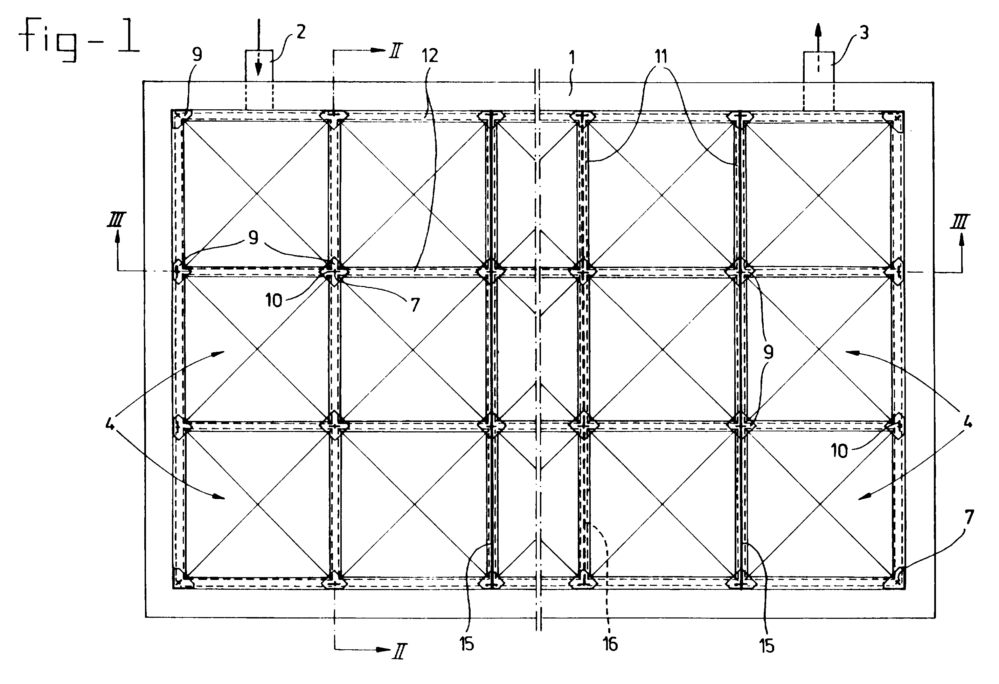

Figure 1 shows a top view of a reactor according to the invention.

Figure 2 shows a cross-section along the line II-II in figure 1.

Figure 3 shows a cross-section along the line III-III in figure 1.

Figure 4 shows a detail from figure 3 on a larger scale.

Figures 5 shows a perspective view of a module tank to be used in the reactor according to the invention.

The reactor shown is intended for the biological treatment of waste water and comprises a reactor vessel 1 which has an inlet 2 for water to be treated and an outlet 3 for treated water and a number of module tanks 4, which adjoin one another and in which support material in the form of lava fragments of plastic rings or cylinders or corrugated sheeting-like packages has been or is fitted. The biomass can adhere to this support material, which mass is needed for the anaerobic or aerobic decomposition of impurities in the water.

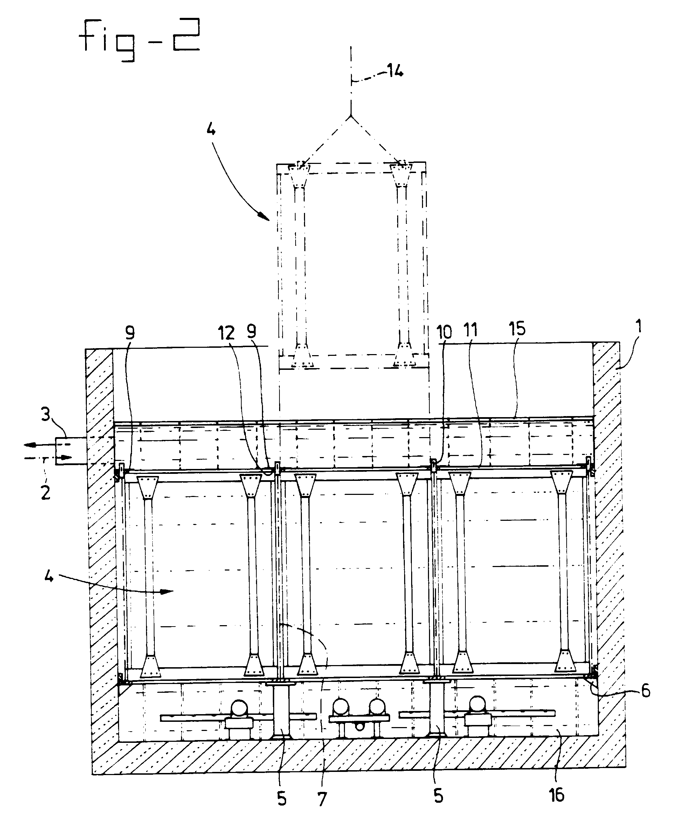

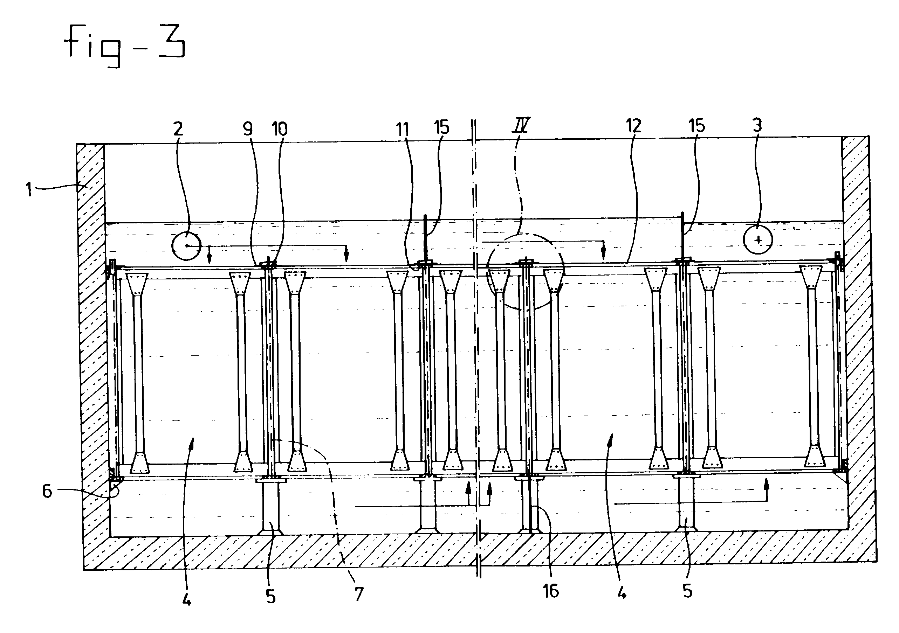

The module tanks 4 rest on legs 5 and wall supports 6. A rod-shaped tension anchor 7, which is indicated by a broken line in figures 2 and 3, extends from each of these legs and wall supports to above the module tanks. An opening is made in the upper end of each tension anchor 7. The tension anchors 7 serve to fix the module tanks at their tops. To this end the upper end of each tension anchor 7 projects through an opening in a clamp plate 9 and a wedge 10, which clamps the clamp plate 9 over a number (one, two or four) of corner points of module tanks, is struck through the opening in the upper end of the tension anchor.

Planks 11 and 12 can also be laid over the edges of the module tanks. The clamp plates 9 then press onto these planks.

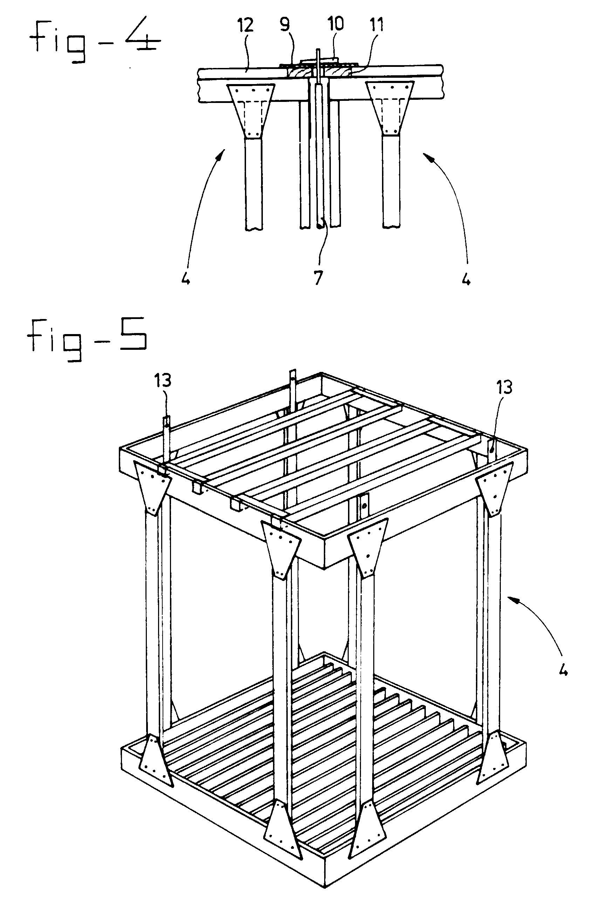

It will be obvious that by striking the wedges 10 free and removing the clamp plates 9, the module tanks can be removed. To this end, each module tank is provided with lifting hooks 13 (figure 4) intended for fixing the hoisting cables 14 of a hoist (figure 2).

The flow of the water from the inlet 2 to the outlet 3 can be influenced by means of baffle plates 15 and 16. The arrows in figure 3 indicate the direction of flow. The baffle plates 15 project above the module tanks, whilst the baffle plates 16 project below the module tanks.

The invention makes it possible to replace one or a few module tanks by clean module tanks at set times, without removing the water from the reactor vessel. The time for which the reactor is shut down can be kept to a minimum. Because the tanks are fixed at the top, the fixing can easily be undone.

## Claims

1. Reactor for the biological treatment of waste water, comprising a reactor vessel (1) intended to receive support material in the form of a great number of pieces such lava fragments, plastic rings or cylinders or corrugated sheeting-like packages, to which biomass can adhere, which reactor vessel is provided with an inlet (2) for water to be treated and an outlet (3) for treated water, characterised in that a number of module tanks (4) adjoining one another so that the horizontal cross section of the reactor vessel is occupied by the module tanks, and over which said support material pieces can be distributed, are placed in the reactor vessel (1), which module tanks can individually be inserted in and removed from the reactor.

2. Reactor according to claim 1, characterised in that the module tanks are fixed in an easily detachable manner at their tops.

3. Reactor according to claim 2, characterised in that the module tanks rest, at some distance above the base of the reactor vessel, on supports (5, 6) from which tension anchors (7) extend upwards to above the top of the modules through a slot in clamp plates (9), each clamp plate (9) pressing on the corners of a number of module tanks (4) and being detachably fixable by means of a wedge which is inserted through an eye in the upper end of a tension anchor (7).

4. Reactor according to claim 3, characterised in that planks (11, 12), which are fixed by means of the clamp plates (9), are placed over the top edges of the module tanks.

5. Reactor according to one of the preceding claims, characterised by baffle plates (15, 16) to cause water to flow from the inlet via vertical downward and upward flows through the successive module tanks to the outlet.

## Patentansprüche

1. Reaktor für die biologische Behandlung von Abwasser, der ein Reaktionsgefäß (1) zur Aufnahme von Trägermaterial in Form einer großen Anzahl von Teilen, wie beispielsweise Lavabruchstücken, Kunststoffringen oder -zylindern oder wellenförmigen blechartigen Füllkörpern, an denen Biomasse haften kann, umfaßt, wobei das Reaktionsgefäß mit einem Einlaß (2) für zu behandelndes Wasser und einem Auslaß (3) für behandeltes Wasser versehen ist, **dadurch gekennzeichnet,** daß eine Reihe von Modultanks (4), die aneinandergrenzen, so daß der horizontale Querschnitt des Reaktionsgefäßes durch die Modultanks eingenommen wird, und auf die die Trägermaterialstücke verteilt werden können, in dem Reaktionsgefäß (1) angeordnet sind, wobei die Modultanks einzeln in den Reaktor eingeführt und aus ihnen entnommen werden können.

2. Reaktor nach Anspruch 1, **dadurch gekennzeichnet,** daß die Modultanks auf leicht lösbare Weise an ihren Oberseiten befestigt sind.

3. Reaktor nach Anspruch 2, **dadurch gekennzeichnet,** daß der Modultank in einem bestimmten Abstand über dem Boden des Reaktionsgefäßes auf Auflagen (5, 6) aufliegt, von denen aus sich Spannverankerungen (7) nach oben bis über die Module durch einen Schlitz in Klemmplatten (9) erstrecken, wobei jede Klemmplatte (9) auf die Ecken einer Reihe von Modultanks (4) drückt und mittels eines Keils, der durch eine Öffnung im oberen Ende einer Spannverankerung (7) eingeführt wird, lösbar befestigt werden kann.

4. Reaktor nach Anspruch 3, **dadurch gekennzeichnet,** daß Planken (11, 12), die mit den Klemmplatten (9) befestigt sind, auf die oberen Ränder der Modultanks aufgelegt werden.

5. Reaktor nach einem der vorangehenden Ansprüche, **gekennzeichnet durch** Zwischenplatten (15, 16), die bewirken, daß Wasser vom Einlaß über vertikal nach unten und nach oben gerichtete Ströme durch die aufeinanderfolgenden Modultanks zu dem Auslaß strömt.

## Revendications

1. Réacteur pour l'épuration biologique d'eaux usées, comprenant une cuve (1) de réacteur destinée à recevoir un matériau support sous la forme d'un grand nombre d'éléments tels que des fragments de lave, des anneaux ou des cylindres de matière plastique ou des garnissages analogues à des tôles ondulées, auxquels peut adhérer de la biomasse, laquelle cuve de réacteur est pourvue d'une entrée (2) pour les eaux à épurer et d'une sortie (3) pour les eaux épurées, caractérisé en ce qu'un certain nombre de bacs modulaires (4) disposés de manière contiguë les uns aux autres de façon que la section horizontale de la cuve du réacteur soit occupée par les bacs modulaires, et parmi lesquels peuvent être répartis les éléments du matériau support, sont placés dans la cuve (1) du réacteur, lesquels bacs modulaires peuvent être individuellement insérés dans le réacteur et en être retirés.

2. Réacteur selon la revendication 1, caractérisé en ce que les bacs modulaires sont fixés, en haut, de manière à pouvoir être facilement détachés.

3. Réacteur selon la revendication 2, caractérisé en ce que les bacs modulaires reposent, à une certaine distance au-dessus de la base de la cuve du réacteur, sur des supports (5, 6) depuis lesquels des pièces d'ancrage (7) travaillant en traction s'élèvent jusqu'au-dessus du haut des modules à travers une fente ménagée dans des plaques de serrage (9), chaque plaque de serrage (9) comprimant les angles d'un certain nombre de bacs modulaires (4) et pouvant être fixée de manière amovible par l'intermédiaire d'une clavette introduite à travers un oeillet situé à l'extrémité supérieure d'une pièce d'ancrage (7) travaillant en traction.

4. Réacteur selon la revendication 3, caractérisé en ce que des madriers (11, 12), fixés à l'aide des plaques de serrage (9), sont placés sur le bord supérieur des bacs modulaires.

5. Réacteur selon l'une des revendications précédentes, caractérisé par des déflecteurs (15, 16) pour amener les eaux à circuler, depuis l'entrée jusqu'à la sortie, en descendant et en remontant à travers les bacs modulaires successifs.
